# EUROPEAN PATENT APPLICATION

(11) **EP 3 901 761 A2**
(43) Date of publication of application: **27.10.2021**
(21) Application number: 21190930.4
(22) Date of filing: 12.08.2021
(51) Int. Cl.: G06F 8/38, G06N 20/00, G06F 16/9038

(54) **METHOD, APPARATUS, AND ELECTRONIC DEVICE FOR PROCESSING VISUAL DATA OF DEEP MODEL**

(30) Priority: 15.12.2020 CN 202011480639
(71) Applicant: BEIJING BAIDU NETCOM SCIENCE AND TECHNOLOGY CO. LTD., 100085 Beijing (CN)
(72) Inventor: SHI, Yixin, Beijing, 100085 (CN); PAN, Zihao, Beijing, 100085 (CN); SHEN, Yuhan, Beijing, 100085 (CN); LV, Xueying, Beijing, 100085 (CN); LAI, Baohua, Beijing, 100085 (CN); WU, Zewu, Beijing, 100085 (CN); CHEN, Zeyu, Beijing, 100085 (CN); ZHAO, Qiao, Beijing, 100085 (CN)
(74) Representative: Maiwald Patent- und Rechtsanwaltsgesellschaft mbH

(57) **Abstract**

The disclosure provides a method and an apparatus for processing visual data of a deep model, and an electronic device. The method includes: determining a user identifier in a request of displaying a workspace in response to acquiring the request; acquiring a set of historical visual data associated with the user identifier; and displaying the set of historical visual data in a page of a workspace of a user corresponding to the user identifier.

## Description

### TECHNICAL FIELD

The disclosure relates to the field of data processing, specifically to the field of artificial intelligence (AI) technologies such as cloud computing, natural language processing (NLP), big data, and deep learning (DL), and particularly to a method and an apparatus for processing visual data of a deep model, and an electronic device.

### BACKGROUND

With the booming development of computer technologies, machine learning (ML) has been rapidly developed, and deep learning (DL) has become more and more effective in various fields. For DL, as an indispensable part in technologies such as image recognition, speech recognition, and recommendation systems, it is important to process visual data of a deep model quickly and conveniently.

### SUMMARY

The disclosure provides a method and an apparatus for processing visual data of a deep model, and an electronic device.

A method is provided according to one aspect of the disclosure. The method includes: determining a user identifier in a request of displaying a workspace in response to acquiring the request; acquiring a set of historical visual data associated with the user identifier; and displaying the set of historical visual data in a page of a workspace of a user corresponding to the user identifier.

An apparatus is provided according to another aspect of the disclosure. The apparatus includes: a first determining module, configured to determine a user identifier in a request of displaying a workspace in response to acquiring the request; an acquiring module, configured to acquire a set of historical visual data associated with the user identifier; and a displaying module, configured to display the set of historical visual data in a page of a workspace of a user corresponding to the user identifier.

An electronic device is provided according to another aspect of the disclosure. The electronic device includes: at least one processor; and a memory communicatively coupled to the at least one processor. The memory is configured to store instructions executable by the at least one processor. When the instructions are executed by the at least one processor, the at least one processor is caused to perform the method for processing the visual data of the deep model as described in some embodiments of the first aspect.

A non-transitory computer-readable storage medium storing computer instructions thereon is provided according to another aspect of the disclosure. The computer instructions are configured to cause a computer to perform the method for processing the visual data of the deep model as described in some embodiments of the first aspect.

A computer program product including a computer program is provided according to another aspect of the disclosure. When the computer program is executed by a processor, the method for processing the visual data of the deep model as described in some embodiments of the first aspect is performed.

The method and the apparatus for processing the visual data of the deep model, the electronic device, and the storage medium provided in the disclosure may have the following beneficial effects.

The user identifier in the request is determined in response to acquiring the request of displaying the workspace. The set of historical visual data associated with the user identifier is acquired. The set of historical visual data is displayed in the page of the workspace of the user corresponding to the user identifier. Therefore, the historical visual data may be displayed and viewed rapidly without reconstructing the model or reproducing the historical model, which greatly enhances training efficiency and saves time.

It should be understood that the content described in this section is not intended to identify the key or important features of the embodiments of the disclosure, nor is it intended to limit the scope of the disclosure. Additional features of the disclosure will be easily understood by the following description.

### BRIEF DESCRIPTION OF THE DRAWINGS

The drawings are used to understand the solution better, and do not constitute a limitation on the application, in which:
FIG. 1A is a flowchart illustrating a method for processing visual data of a deep model provided in some embodiments of the disclosure.
FIG. 1B is a page display diagram illustrating a method for processing visual data of a deep model provided in some embodiments of the disclosure.
FIG. 2A is a flowchart illustrating a method for processing visual data of a deep model provided in some embodiments of the disclosure.
FIG. 2B is a page display diagram illustrating a method for processing visual data of a deep model provided in some embodiments of the disclosure.
FIG. 2C is a page display diagram illustrating a method for processing visual data of a deep model provided in some embodiments of the disclosure.
FIG. 3A is a flowchart illustrating a method for processing visual data of a deep model provided in some embodiments of the disclosure.
FIG. 3B is a page display diagram illustrating a method for processing visual data of a deep model provided in some embodiments of the disclosure.
FIG. 3C is a page display diagram illustrating a method for processing visual data of a deep model provided in some embodiments of the disclosure.
FIG. 4A is a page display diagram illustrating a method for processing visual data of a deep model provided in some embodiments of the disclosure.
FIG. 4B is a page display diagram illustrating a method for processing visual data of a deep model provided in some embodiments of the disclosure.
FIG. 5A is a page display diagram illustrating a method for processing visual data of a deep model provided in some embodiments of the disclosure.
FIG. 5B is a page display diagram illustrating a method for processing visual data of a deep model provided in some embodiments of the disclosure.
FIG. 5C is a page display diagram illustrating a method for processing visual data of a deep model provided in some embodiments of the disclosure.
FIG. 5D is a page display diagram illustrating a method for processing visual data of a deep model provided in some embodiments of the disclosure.
FIG. 6 is a block diagram illustrating an apparatus for processing visual data of a deep model provided in some embodiments of the disclosure.
FIG. 7 is a block diagram illustrating an apparatus for processing visual data of a deep model provided in some embodiments of the disclosure.
FIG. 8 is a block diagram illustrating an electronic device configured to implement a method for processing visual data of a deep model provided in some embodiments of the disclosure.

### DETAILED DESCRIPTION

The following describes the exemplary embodiments of the disclosure with reference to the drawings, which includes various details of the embodiments of the disclosure to facilitate understanding and shall be considered merely exemplary. Therefore, those of ordinary skill in the art should recognize that various changes and modifications may be made to the embodiments described herein without departing from the scope of the disclosure. For clarity and conciseness, descriptions of well-known functions and structures are omitted in the following description.

Data processing is collection, storage, retrieval, processing, conversion, and transmission on data. There are different data processing modes based on structure modes and working modes of processing equipment and temporal and spatial distribution modes of data. Different processing modes require different supports of hardware and software. Since each processing mode has own features, an appropriate processing mode may be selected based on a practical application condition.

Artificial intelligence (AI) is a subject that learns simulating certain thinking processes and intelligent behaviors (such as learning, reasoning, thinking, planning) of human beings through computers, which covers hardware-level technologies and software-level technologies. The AI hardware technologies generally include technologies such as sensors, dedicated AI chips, cloud computing, distributed storage, big data processing, etc.; the AI software technologies mainly include computer vision technology, speech recognition technology, natural language processing (NLP) technology and machine learning (ML)/deep learning (DL), big data processing technology, knowledge graph (KG) technology, etc.

Cloud computing refers to a technology system that may access to an elastic and extensible shared physical or virtual resource pool through a network and deploy and manage resources in an on-demand and self-service manner, in which the resources may include servers, operating systems, networks, software, applications, storage devices, etc. The cloud computing technology may provide an efficient and powerful data processing ability for artificial intelligence (AI), block chain, and other technical applications and model training.

Natural language processing (NLP) is a cross discipline of computer science and linguistics that processes, understands, and uses human languages (for example, Chinese, English) by computers, often referred to as computational linguistics. Natural language is a fundamental symbol that human beings are different from other animals. There will be no human beings' thinking without language. Therefore, NLP embodies the highest task and context of AI, that is, the machine may achieve true intelligence only when the computer has the ability to handle natural language.

A big data technology refers to implementation of collection of a large number of data through a plurality of channels and in-depth data mining and analysis through the cloud computing technology, to ensure that the laws and characteristics among data may be found in time and the value of data may be summarized. The big data technology is very important for understanding data characteristics and predicting development trends.

Deep learning (DL) refers to artificial neural networks of multiple layers and methods for training them. A neural network layer takes numbers in a large number of matrices as an input, takes weights through a non-linear activation manner, and generates another data set as an output. With the appropriate number of matrices, multiple layers may be linked together to form a neural network "brain" for precise and complicated processing, as if one identifies an object-tagged picture.

A method and an apparatus for processing visual data of a deep model, and an electronic device are described referring to the drawings below in some embodiments of the disclosure.

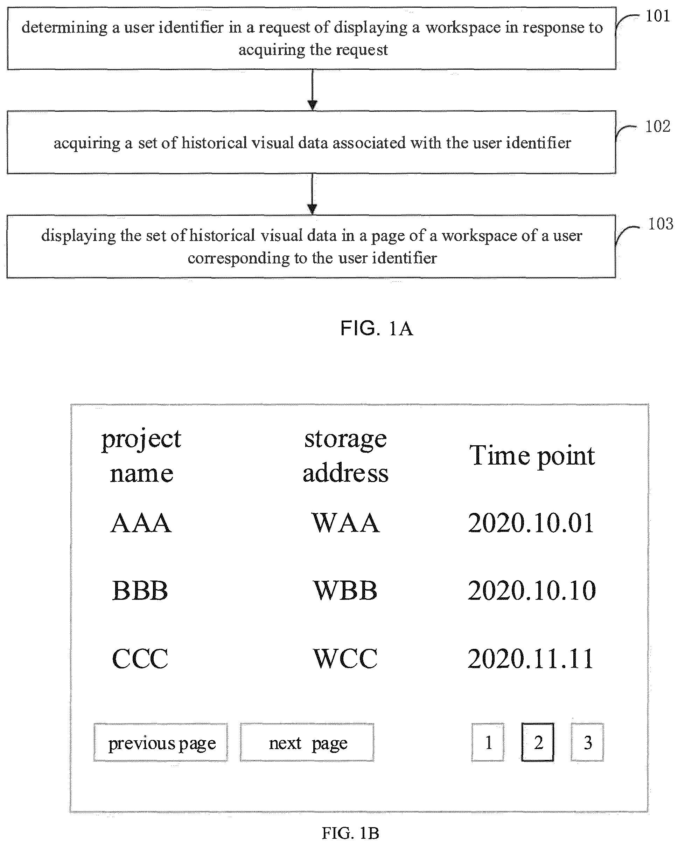

FIG. 1A is a flowchart illustrating a method for processing visual data of a deep model provided in some embodiments of the disclosure.

The method for processing the visual data of the deep model in some embodiments of the disclosure may be executed by an apparatus for processing visual data of a deep model in some embodiments of the disclosure. The apparatus may be configured in an electronic device.

As illustrated in FIG. 1A, the method includes the following.

At block 101, a user identifier in a request of displaying a workspace is determined in response to acquiring the request.

The workspace may be a shared space for personal use when a visual application of the deep model is used.

The user identifier may be a unique identifier that indicates the user's identity when the visual application of the deep model is used.

It is understandable that the request of displaying the workspace may include the user identifier or other content, which may not be limited in the disclosure herein.

In some embodiments of the disclosure, when the request of displaying the workspace is acquired, the request of displaying the workspace is processed to determine the user identifier contained in the request of displaying the workspace.

At block 102, a set of historical visual data associated with the user identifier is acquired.

The set of historical visual data may include one or more pieces of historical visual data, and also may include a time point of generating each piece of historical visual data, or further include a project name of each piece of historical visual data, which may not be limited herein.

In some embodiments of the disclosure, when the user identifier is determined, the set of historical visual data associated with the user identifier may be further acquired.

At block 103, the set of historical visual data is displayed in a page of a workspace of a user corresponding to the user identifier.

When the set of historical visual data is displayed in the page of the workspace of the user corresponding to the user identifier, there may be a plurality of arrangement modes, for example, it may be arranged based on the time point of generating each of the plurality of pieces of historical visual data, or based on the project name of each of the plurality of pieces of historical visual data.

For example, the plurality of pieces of historical visual data may be displayed one by one in the page of the workspace of the user based on the time point of generating each of the plurality of pieces of historical visual data.

A "time-ordering" control may be set in the page of the workspace of the user, to adjust a mode of timc-ordcring by clicking the control. For example, the plurality of pieces of historical visual data may be displayed one by one from front to back based on the time point of generating each of the plurality of pieces of historical visual data. The control is clicked to adjust the mode of time-ordering to order the plurality of pieces of historical visual data from back to front based on the time point of generating each of the plurality of pieces of historical visual data. Alternatively, the plurality of pieces of historical visual data may be ranked one by one from back to front based on the time point of generating each of the plurality of pieces of historical visual data. The control is clicked to adjust so that the plurality of pieces of historical visual data may be adjusted to be ranked from back to front based on the time point of generating each of the plurality of pieces of historical visual data.

Alternatively, the plurality of pieces of historical visual data may be displayed one by one in the page of the workspace of the user based on the project name of each of the plurality of pieces of historical visual data.

A "project name" ordering control may be set in the page of the workspace of the user, to adjust a mode of project name ordering by clicking the control. For example, the plurality of pieces of historical visual data may be displayed one by one in an alphabet sequence from A to Z of project names, and the control is clicked to adjust to an alphabet sequence from Z to A of project names. Alternatively, the plurality of pieces of historical visual data may be displayed one by one in an alphabet sequence from Z to A of project names, and the control is clicked to adjust to an alphabet sequence from A to Z of project names.

It should be noted that the above examples are illustrated only and are not intended to be a limitation of ordering the set of historical visual data in some embodiments of the disclosure.

It is understandable that, different electronic devices may correspond to different sizes of display interfaces. When different electronic devices are employed to view the historical visual data, the quantities of pieces of historical visual data that may be displayed in each page may be different based on the sizes of the display interfaces of the electronic devices employed.

For example, when the historical visual data is viewed by a mobile phone, the quantity of pieces of historical visual data that may be displayed in the page of the workspace of the user may be relatively small, for example, 5, 10.

For example, when the historical visual data is viewed by a computer, the quantity of pieces of historical visual data that may be displayed in the page of the workspace of the user may be relatively large, for example, 20, 30.

It should be noted that the quantities of pieces of historical visual data displayed on the page of the workspace of the user and the electronic devices employed are illustrated only and are not intended to be a limitation of displaying the set of historical visual data in the page of the workspace in some embodiments of the disclosure.

It is understandable that, each page in the workspace may display a certain quantity of pieces of historical visual data. Other historical visual data beyond the quantity may be displayed in the next page or subsequent pages. The user may turn pages by clicking a "next page" control or a "2", control, a "3" control and other corresponding page control, or in other ways, which will not be limited herein.

In a possible implementation, a "previous page", a "next page", and other controls may be added in the page based on requirements, to turn pages. For example, a page may be as illustrated in FIG. 1B. The current page displays 3 pieces of historical visual data in total, which includes a project name, a storage address, and a generating time point of each piece of historical visual data. A storage address corresponding to a project name "AAA" is "WAA", and a corresponding generating time point is "2020.10.01"; a storage address corresponding to a project name "BBB" is "WBB", and a corresponding generating time point is "2020.10.10"; and a storage address corresponding to a project name "CCC" is "WCC", and a corresponding generating time point is "2020.11.11". The page may further include "previous page" and "next page" controls and "1" "2" "3" controls. It may be seen that the current page is the second page. The user may turn pages by clicking the controls "previous page" and "next page", and may go to the first page by clicking "1", or go to the third page by clicking "3".

It should be noted that, each name under the project name, each address under the storage address, each time under the generating time point, and each control in the above page are only examples, which may not be a limitation of displaying the historical visual data in the disclosure.

Thus, when the user requires to use the historical visual data subsequently, the historical visual data may be viewed directly in the page of the workspace without reconstructing the model or reproducing the historical model, which greatly enhances training efficiency, saves time, and reduces the user's burden.

In some embodiments of the disclosure, the user identifier in the request of displaying the workspace is determined in response to acquiring the request of displaying the workspace. The set of historical visual data associated with the user identifier is acquired. The set of historical visual data is displayed in the page of the workspace of the user corresponding to the user identifier. Therefore, the historical visual data may be displayed and viewed rapidly without reconstructing the model or reproducing the historical model, which greatly enhances training efficiency and saves time.

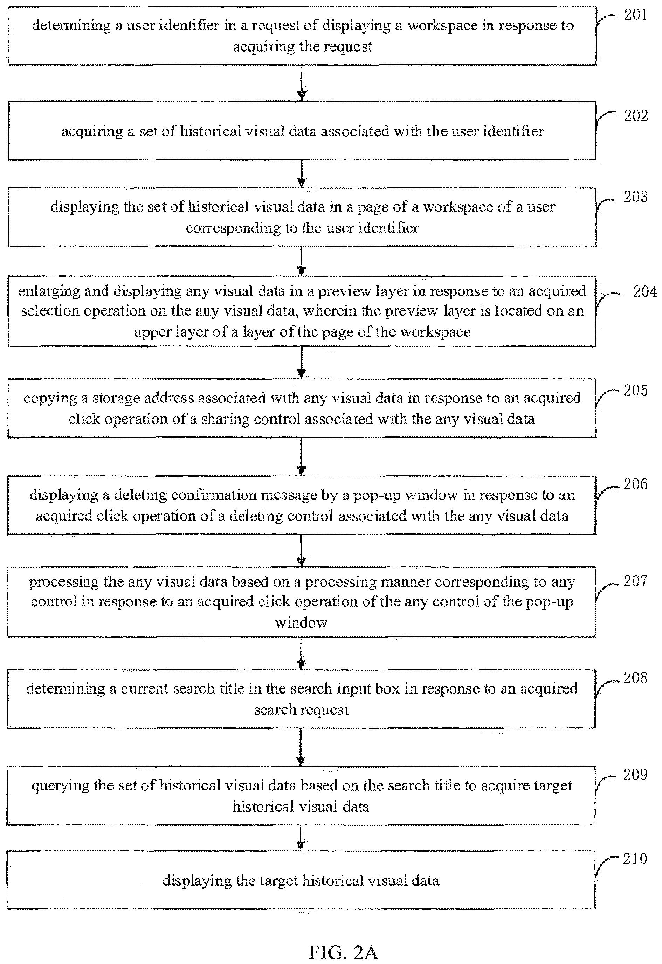

In some embodiments of the disclosure, the set of historical visual data may be displayed in the page of the workspace of the user based on the user identifier determined based on the acquired request of displaying the workspace and the set of historical visual data associated with the user identifier, which greatly enhances efficiency. Furthermore, corresponding processing operations such as deletion, sharing may be performed for each piece of visual data. The following is a detailed description of processing the visual data in this manner in combination with FIG. 2A.

At block 201, a user identifier in a request of displaying a workspace is determined in response to acquiring the request.

At block 202, a set of historical visual data associated with the user identifier is acquired.

The set of historical visual data may include a plurality of pieces of historical visual data, and may further include a storage address or other content associated with each of the plurality of pieces of historical visual data, which will not be limited herein.

At block 203, the set of historical visual data is displayed in a page of a workspace of a user corresponding to the user identifier.

The page of the workspace may include a search input box or other content, which are not limited in the disclosure.

At block 204, any visual data is enlarged and displayed in a preview layer in response to an acquired selection operation on the any visual data, in which the preview layer is located on an upper layer of a layer of the page of the workspace.

Visual data may be existing historical visual data, and may be newly-added visual data, which are not limited herein.

When any visual data is in a selected state, there may be a plurality of representation modes.

For example, the visual data selected may be enlarged and displayed in the preview layer. Alternatively, when the visual data is selected, the color of the corresponding background becomes grey and the corresponding font becomes bright and the like. Alternatively, when the visual data is in the selected state, a "tick" label appears in the corresponding identification box.

It should be noted that the manner of representing the visual data in the selected state is illustrated only and is not intended to be a limitation of the visual data being in the selected state in some embodiments of the disclosure.

It may be understood that the user may make one piece of visual data in the selected state and also may make a plurality of pieces of visual data in the selected state at the same time, which will not be limited herein.

At block 205, a storage address associated with any visual data is copied in response to an acquired click operation of a sharing control associated with the any visual data.

The page of the workspace may further include a "sharing" control.

When the user clicks the "sharing" control associated with the any visual data, the storage address associated with the any visual data may be copied so as to be shared to others directly, or to be saved in the relevant file so that the user may directly use the visual data, which greatly facilitates the process that the user communicates and shares with others.

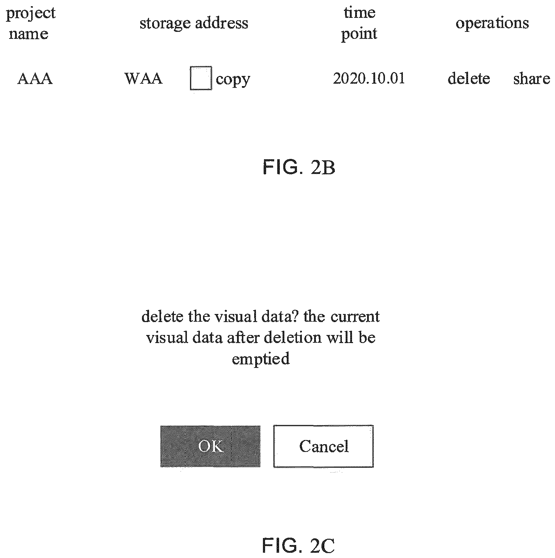

In a possible implementation, for example, a page may be as illustrated in FIG. 2B. In the page, the project name of the visual data is "AAA", the storage address of the visual data is "WAA" and has the corresponding copy control, the generating time point of the visual data is "2020.10.01 ", and the operations corresponds to "delete" and "share" controls. After the user clicks the "share" control, a prompt message such as "link has been successfully copied" may disappear, indicating that the user has successfully copied the address link corresponding to the visual data and may share the address link.

Alternatively, historical visual data may be shared in other ways.

For example, in the page as illustrated in FIG. 2B, the user clicks the "copy" control at the storage address to copy the link for use.

It should be noted that, each control, each project name, each storage address, and each time point in the above page are only examples, which may not be a limitation of the pages, the controls, the project names, the storage addresses, and the time points in the disclosure.

It should be noted that the above sharing manners are illustrated only and are not intended to be a limitation of copying the storage address associated with the any visual data in some embodiments of the disclosure.

At block 206, a deleting confirmation message is displayed by a pop-up window in response to an acquired click operation of a deleting control associated with the any visual data.

At block 207, the any visual data is processed based on a processing manner corresponding to any control in response to an acquired click operation of the any control of the pop-up window.

The page of the workspace of the user may include a "delete" control, and the user clicks the "delete" control to delete the corresponding historical visual data.

In a possible implementation, for example, a page may be as illustrated in FIG. 2B. When the user clicks the "delete" control, a corresponding pop-up window may appear, and a page of the pop-up window may be illustrated in FIG. 2C. The page of the pop-up window as illustrated in FIG. 2C may include a prompt message such as "delete the visual data? the current visual data after deletion will be emptied", an "OK" control, and a "cancel" control. The user clicks the "OK" control in the pop-up window to delete the historical visual data, and clicks the "cancel" control in the pop-up window to cancel to delete the historical visual data.

Alternatively, after the user clicks the "delete" control, the prompt message such as "delete the historical visual data?", an "OK" control, a "cancel" control, and a "close" control may be displayed in the page of the pop-up window. After the user clicks the "close" control, the current page of the pop-up window may exist without processing the visual data.

It should be noted that the prompt message of the page of the pop-up window may also be other content, which is illustrative only and not a limitation of the content in the pop-up window. In addition, the page of the pop-up window may contain other content, and the above prompt message and each control are illustrative only and not a limitation of the page of the pop-up window of the disclosure.

At block 208, a current search title in the search input box is determined in response to an acquired search request.

The page of the workspace of the user may include the search input box, and the user may input the content to be queried in the search input box, for example, the project name, the generating time point, which are not limited herein.

At block 209, the set of historical visual data is queried based on the search title to acquire target historical visual data.

The target historical visual data acquired based on the search title may be one or multiple, which will not be limited herein.

At block 210, the target historical visual data are displayed.

When the target historical visual data is displayed, there may be a plurality of manners, for example, the target historical visual data acquired may be enlarged and displayed in the preview layer, or a list of a plurality of pieces of target historical visual data may also be directly displayed, which will not be limited herein.

It should be noted that, in some embodiments of the disclosure, the sequence of the action of performing the selection operation on the visual data, the action of performing the deletion operation on the visual data, the action of copying the storage address for the visual data, and the action of displaying the target historical visual data based on the search title, is only illustrated, and not a limitation of execution timing of operations on the visual application of the deep model. In the actual application, the visual application of the deep model may execute the corresponding instruction based on the acquired operation.

In some embodiments of the disclosure, the user identifier in the request of displaying the workspace is determined in response to acquiring the request. The set of historical visual data associated with the user identifier is acquired. The set of historical visual data is displayed in the page of the workspace of the user corresponding to the user identifier. Furthermore, any visual data may be enlarged and displayed on the preview layer, the storage address associated with any visual data may be copied, any visual data may be deleted in the pop-up window, and the target historical visual data may be searched for through the input box. Therefore, selection, sharing, deletion, searching, and other operations on the visual data may be implemented, so that the visual data may be rapidly processed and it is convenient for the user to operate.

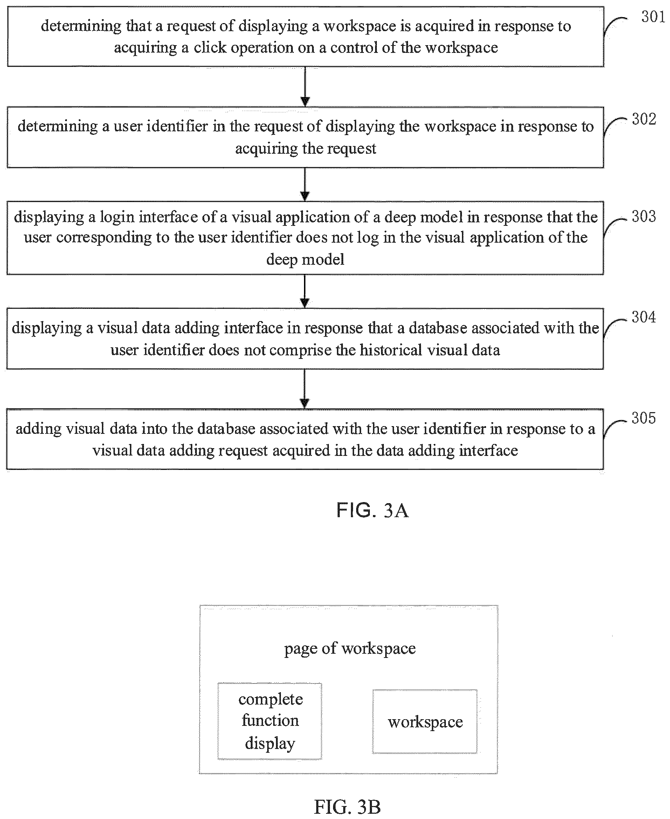

Further, when the database associated with the user identifier does not include the historical visual data, the corresponding historical visual data may be further added. The following is a detailed description of adding the historical visual data in combination with FIG. 3A.

At block 301, it is determined that a request of displaying a workspace is acquired in response to acquiring a click operation on a control of the workspace.

The user may open the workspace by clicking the control of the workspace.

For example, in the page as illustrated in FIG. 3B, there are a prompt word "page of workspace", a "complete function display" control, and a "workspace" control. If the "complete function display" control is clicked, relevant functions and demonstration of the visual application of the deep model may be viewed. If the "workspace" control is clicked, the control of the workspace may be opened.

It should be noted that, the prompt word and each control in the above page are only illustrative, and may be modified correspondingly based on the requirements, which will not be limited herein.

In a possible implementation, the user may further open the workspace by using a command line.

It should be noted that the above examples are illustrated only and are not intended to be a limitation of opening the workspace in some embodiments of the disclosure.

At block 302, a user identifier in the request of displaying the workspace is determined in response to acquiring the request.

At block 303, a login interface of a visual application of a deep model is displayed in response that the user corresponding to the user identifier does not log in the visual application of the deep model.

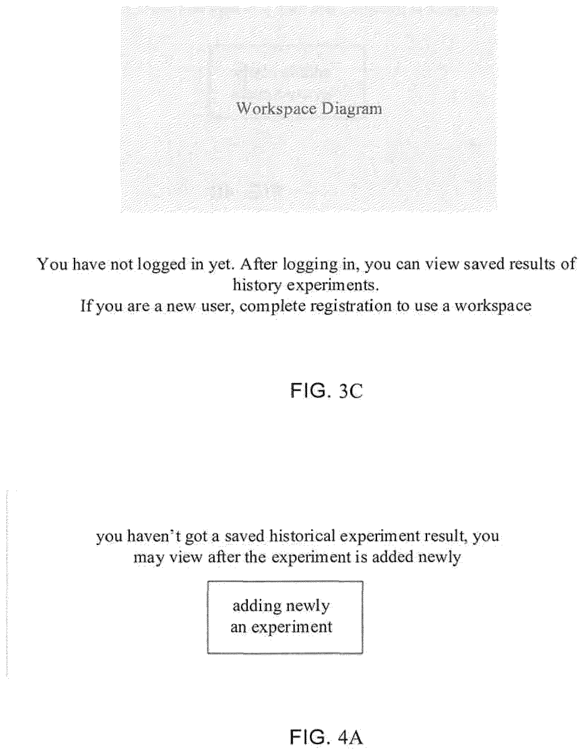

For example, when the user does not log in the visual application of the deep model, the page may be as illustrated in FIG. 3C, and a prompt message such as "you have not logged in. After logging in, you can view saved results of history experiments" and "if you are a new user, complete registration to use a workspace" may exist in the page.

When the user has used the visual application of the deep model, the user may click a "login" control to go to a login interface of the visual application of the deep model. The user may log in by a two-dimensional code, or by an account and a password, or in other ways, which are not limited herein.

Alternatively, when the user hasn't used the visual application of the deep model, the user may click a "registration" control. After registration is completed, the user may log in to use the visual application of the deep model.

It should be noted that the interface in above examples is illustrated only and is not intended to be a limitation of the page for prompting the user to log in and the login page in some embodiments of the disclosure.

At block 304, a visual data adding interface is displayed in response that a database associated with the user identifier does not include the historical visual data.

For example, when the database associated with the user identifier does not include the historical visual data, the corresponding display page may be as illustrated in FIG. 4A. The page may include a prompt message "you haven't got a saved historical experiment result, you may view after the experiment is added newly" and a "adding newly an experiment" control.

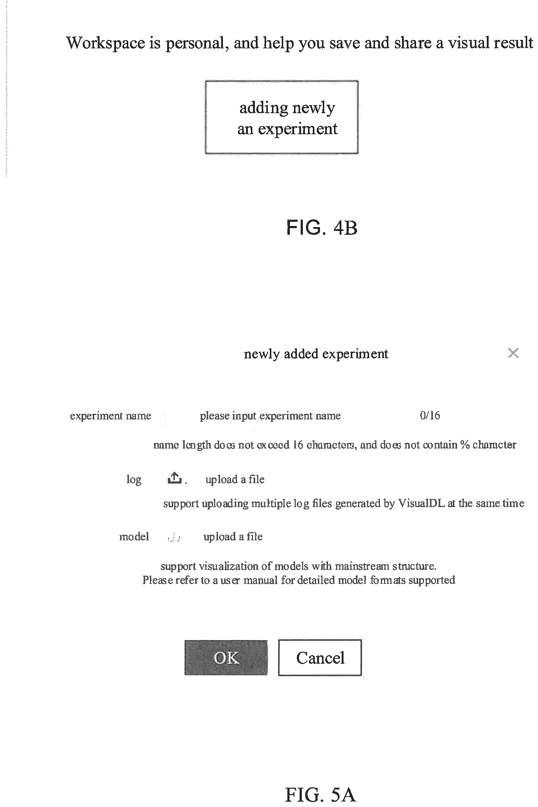

Alternatively, the visual data adding interface may be as illustrated in FIG. 4B. The page may include a prompt message "Workspace is personal, and help you save and share a visual result" and a "adding newly an experiment" control. The user clicks the "adding newly an experiment" control to send a visual data adding request.

It should be noted that the prompt message and the control in the above page are illustrated only and are not intended to be a limitation of the visual data adding interface in some embodiments of the disclosure.

At block 305, visual data is added into the database associated with the user identifier in response to a visual data adding request acquired in the data adding interface.

When the visual data is added into the database associated with the user identifier, a name of the visual data may be added, and the name of the visual data may be a model name, or a log name, or a model name and a log name, which are not limited herein.

In a possible implementation, the corresponding content and controls may be added at the data adding interface. For example, the initial state of the visual data adding page may be as illustrated in FIG. 5A, including "newly added experiment", "experiment name", "log" and an associated "upload a file" control, "model" and an associated "upload a file" control, as well as an "OK" control and a "cancel" control. The user clicks the "upload a file" control corresponding to the "log" to upload one or more logs or log files; and click the "upload a file" control corresponding to the "model" to upload the model.

It should be noted that the content such as "newly added experiment", "experiment name", "log", "model" and various controls in the initial state of the above data adding page are illustrative only and not as a limitation of the content and controls of the initial state of the data adding page in some embodiments of the disclosure.

It may be appreciated that after the visual data adding request is acquired in the visual data adding interface, the visual data to be added may be verified first.

Then, the name of the visual data to be added is added in the data adding interface in response that the visual data to be added passes the verifying.

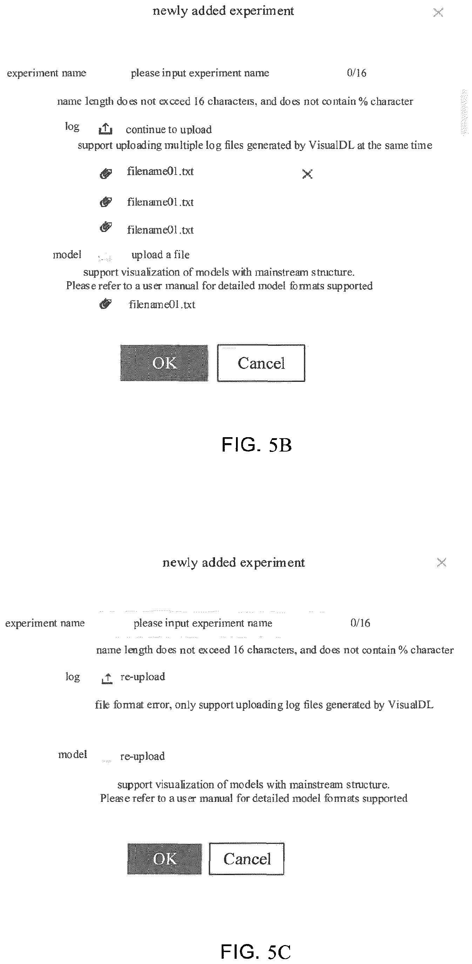

In a possible implementation, in response that the visual data to be added passes the verifying, the visual data adding interface may be as illustrated in FIG. 5B. The interface may contain "newly added experiment", "experiment name" and a corresponding input box, "log" and an associated "continue to upload" control, "filename01.txt", "filename01.txt", "filename01.txt", "model" and an associated "upload a file" control, and "filename01.txt". If the uploaded file is selected, a "delete" control may appear, and the control is clicked to delete the current added file. The visual data adding interface may further contain other content and controls, which are not limited herein. Since one piece of historical data is only associated with one model, and one model may be trained multiple times, one model may correspond to a plurality of pieces of historical visual data. If the visual data to be added passes the verifying, the "upload a file" control associated with "log" in the interface becomes "continue to upload", and the "upload a file" control associated with "model" is set in gray. If the "cancel" control is clicked, any content may not be saved, and the pop-up window is canceled; If the "Ok" control is clicked, the pop-up window exits, the page automatically refreshes and adds an experiment list, and the prompt message may disappear in several seconds, for example, 2s, 5s, which will not be limited herein.

It should be noted that, the content, the input box, various controls, the pop-up window, and the prompt message in the above data adding interface are illustrated only and are not intended to be a limitation of data adding in some embodiments of the disclosure.

Alternatively, a data abnormality reason is displayed in the data adding interface in response that the visual data to be added does not pass the verifying.

In a possible implementation, when the visual data to be added does not pass the verifying, the visual data adding interface may be as illustrated in FIG. 5C. The page may contain "newly added experiment", "experiment name", "log" and a corresponding "re-upload" control, "file format error, only support uploading log files generated by VisualDL", "model" and a corresponding "re-upload" control, "support visualization of models with mainstream structure. Please refer to a user manual for detailed model formats supported", an "OK" control, a "cancel" control, or other content and controls. It may be seen that the reason for the current data abnormality is "file format error, only support uploading log files generated by VisualDL". In the actual application, the data abnormality reason may be other reasons, which is not limited herein.

It should be noted that the content, the prompt message, and the control in the above data adding interface are illustrated only and are not intended to be a limitation of the data adding interface in some embodiments of the disclosure.

It may be understood that, when the user adds the visual data to input the experiment name, a prompt message "name length does not exceed 16 characters, and does not contain % character" may appear, other prompt messages may appear, or no prompt messages may appear, which are not limited herein.

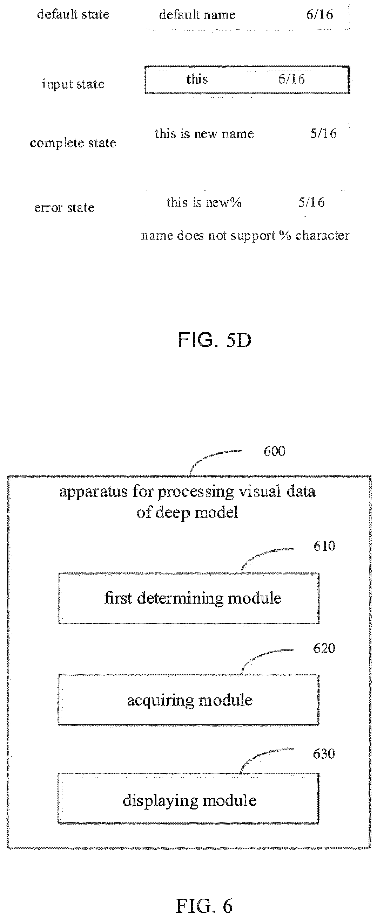

In a possible implementation, when clicking the input box corresponding to "experiment name", an input box interaction state page may appear, for example, the page as illustrated in FIG. 5D. The page may include a "default state" and its corresponding input box, an "input state" and its corresponding input box displayed with "this", a "complete state" and its corresponding input box displayed with "this is a new name", an "error state" and its corresponding input box displayed with "this is new%". A prompt message "name does not support % character" is displayed beneath the input box displayed with "this is new%". A prompt message "exceeded character not shown" is displayed beneath the "error state".

It should be noted that the content, each input box, the content displayed in each input box, and each prompt message in the input box interaction state page are merely illustrative, and may not be a limitation of the content, input boxes, and prompt messages in the input box interaction state page of the disclosure.

In some embodiments of the disclosure, the visual data is added in the database associated with the user identifier in response that the visual data to be added passes the verifying; the data abnormality reason is displayed in the data adding interface in response that the visual data to be added does not pass the verifying.

In some embodiments of the disclosure, it is determined that the request of displaying the workspace is acquired in response to acquiring the click operation on the control of the workspace. Or it is determined that the request of displaying the workspace is acquired in response to acquiring the command line instruction configured to open the workspace. The user identifier in the request of displaying the workspace is determined in response to acquiring the request. The login interface of the visual application of the deep model is displayed in response that the user corresponding to the user identifier does not log in the visual application of the deep model. The visual data adding interface is displayed in response that the database associated with the user identifier does not include the historical visual data. The visual data is added into the database associated with the user identifier in response to the visual data adding request acquired in the data adding interface. Therefore, the user may open the workspace through the control of the workspace or the command line instruction, log in the login interface of the visual application of the deep model, and add the visual data in the database, which greatly facilitates the saving, addition, and recording of the visual data for the user, enhances efficiency, and gives the user a good use experience.

The disclosure further provides an apparatus for processing visual data of a deep model. FIG. 6 is a block diagram illustrating a structure of an apparatus for processing visual data of a deep model provided in some embodiments of the disclosure.

As illustrated in FIG. 6, the apparatus 600 includes a first determining module 610, an acquiring module 620 and a displaying model 630.

The first determining module 610 is configured to determine a user identifier in a request of displaying a workspace in response to acquiring the request.

The acquiring module 620 is configured to acquire a set of historical visual data associated with the user identifier.

The displaying module 630 is configured to display the set of historical visual data in a page of a workspace of a user corresponding to the user identifier.

It should be noted that, functions and specific implementation principles of each module in some embodiments of the disclosure may refer to various method embodiments, which is not repeated herein.

With the apparatus for processing the visual data of the deep model in some embodiments of the disclosure, the user identifier in the request of displaying the workspace is determined in response to acquiring the request of displaying the workspace. The set of historical visual data associated with the user identifier is acquired. The set of historical visual data is displayed in the page of the workspace of the user corresponding to the user identifier. Therefore, the historical visual data may be displayed and viewed rapidly without reconstructing the model or reproducing the historical model, which greatly enhances training efficiency and saves time.

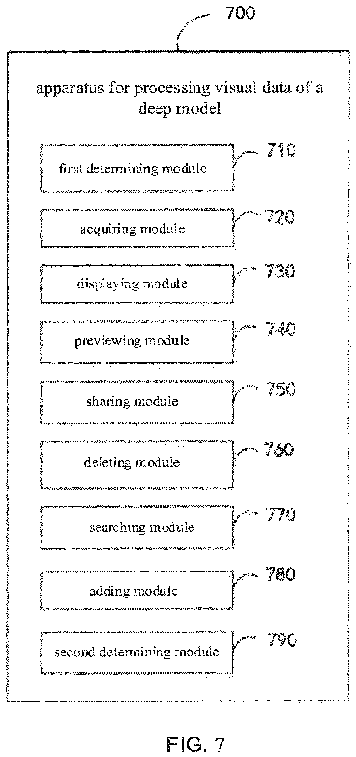

FIG. 7 is a block diagram illustrating a structure of an apparatus for processing visual data of a deep model provided in some embodiments of the disclosure.

As illustrated in FIG. 7, the apparatus 700 includes a first determining module 710, an acquiring module 720, a displaying module 730, a previewing module 740, a sharing module 750, a deleting module 760, a searching module 770, an adding module 780 and a second determining model 790.

The first determining module 710 is configured to determine a user identifier in a request of displaying a workspace in response to acquiring the request.

It should be understood that, the first determining module 710 in some embodiments may have the same function and structure with the first determining module 610 in the above embodiments.

The acquiring module 720 is configured to acquire a set of historical visual data associated with the user identifier.

It should be understood that, the acquiring module 720 in some embodiments may have the same function and structure with the acquiring module 620 in the above embodiments.

The displaying module 730 is configured to display the set of historical visual data in a page of a workspace of a user corresponding to the user identifier.

In a possible implementation, the display model 730 may be configured to display the plurality of pieces of historical visual data one by one in the page of the workspace of the user based on the time point of generating each of the plurality of pieces of historical visual data.

In a possible implementation, the display model 730 may be configured to display the plurality of pieces of historical visual data one by one in the page of the workspace of the user based on the project name of each of the plurality of pieces of historical visual data.

It should be understood that, the displaying module 730 in some embodiments may have the same function and structure with the displaying module 630 in the above embodiments.

The previewing module 740, is configured to, enlarge and display any visual data in a preview layer in response to an acquired selection operation on the any visual data, in which the preview layer is located on an upper layer of a layer of the page of the workspace.

The sharing module 750, is configured to, copy a storage address associated with any visual data in response to an acquired click operation of a sharing control associated with the any visual data.

The deleting module 760, is configured to, display a deleting confirmation message by a pop-up window in response to an acquired click operation of a deleting control associated with the any visual data; and process the any visual data based on a processing manner corresponding to any control in response to an acquired click operation of the any control of the pop-up window.

The searching module 770 is configured to, determine a current search title in the search input box in response to an acquired search request; query the set of historical visual data based on the search title to acquire target historical visual data; and display the target historical visual data.

The adding module 780 is configured to, display a visual data adding interface in response that a database associated with the user identifier does not comprise the historical visual data; and add visual data into the database associated with the user identifier in response to a visual data adding request acquired in the data adding interface.

In a possible implementation, the adding module 780 is configured to verify visual data to be added; display a name of the visual data to be added in the data adding interface in response that the visual data to be added passes the verifying; and display a data abnormality reason in the data adding interface in response that the visual data to be added does not pass the verifying.

The second determining 790 is configured to, determine that the request of displaying the workspace is acquired in response to acquiring a click operation on a control of the workspace; or, determine that the request of displaying the workspace is acquired in response to acquiring a command line instruction configured to open the workspace.

In a possible implementation, the second determining module 790 may be further configured to, display a login interface of a visual application of a deep model in response that the user corresponding to the user identifier does not log in the visual application of the deep model.

It should be noted that, the functions and specific implementation principles of each module in some embodiments of the disclosure may refer to various method embodiments, which is not repeated herein.

With the apparatus for processing the visual data of the deep model in some embodiments of the disclosure, the user identifier in the request of displaying the workspace is determined in response to acquiring the request. The set of historical visual data associated with the user identifier is acquired. The set of historical visual data is displayed in the page of the workspace of the user corresponding to the user identifier. Furthermore, any visual data may be enlarged and displayed on the preview layer, the storage address associated with any visual data may be copied, any visual data may be deleted in the pop-up window, the target historical visual data may be searched for through the input box, and the visual data may be added in the visual data adding interface. Therefore, selection, sharing, deletion, searching, adding, and other operations on the visual data may be implemented, so that the visual data may be rapidly displayed and viewed, and processed with the selection, sharing, deletion, searching, adding, and other operations, without reconstructing the model or reproducing the historical model for the convenience of operations by the user, which greatly enhances training efficiency and saves time.

In some embodiments of the disclosure, an electronic device, a readable storage medium, and a computer program product are further provided.

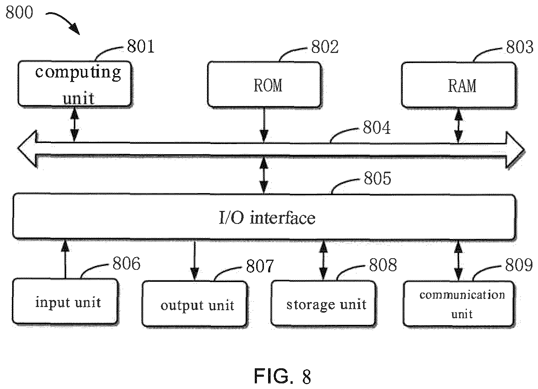

FIG. 8 is a block diagram illustrating an example electronic device 800 in some embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown herein, their connections and relations, and their functions are merely examples, and are not intended to limit the implementation of the disclosure described and/or required herein.

As illustrated in FIG. 8, the device 800 includes a computing unit 801. The computing unit 801 may execute various appropriate actions and processes according to computer program instructions stored in a read only memory (ROM) 802 or computer program instructions loaded to a random access memory (RAM) 803 from a storage unit 808. The RAM 803 may also store various programs and date required by the device 800. The computing unit 801, the ROM 802, and the RAM 803 may be connected to each other via a bus 804. An input/output (I/O) interface 805 is also connected to the bus 804.

A plurality of components in the device 800 are connected to the I/O interface 805, including: an input unit 806 such as a keyboard, a mouse; an output unit 807 such as various types of displays, loudspeakers; a storage unit 808 such as a magnetic disk, an optical disk; and a communication unit 809, such as a network card, a modem, a wireless communication transceiver. The communication unit 809 allows the device 800 to exchange information/data with other devices over a computer network such as the Internet and/or various telecommunication networks.

The computing unit 801 may be various general-purpose and/or special-purpose processing components having processing and computing capabilities. Some examples of the computing unit 801 include, but are not limited to, a central processing unit (CPU), a graphics processing unit (GPU), various dedicated artificial intelligence (AI) computing chips, various computing units running machine learning model algorithms, a digital signal processor (DSP), and any suitable processor, controller, microcontroller, etc. The computing unit 801 executes the above-mentioned methods and processes, such as the method. For example, in some implementations, the method may be implemented as computer software programs. The computer software programs are tangibly contained a machine readable medium, such as the storage unit 808. In some embodiments, a part or all of the computer programs may be loaded and/or installed on the device 800 through the ROM 802 and/or the communication unit 809. When the computer programs are loaded to the RAM 803 and are executed by the computing unit 801, one or more blocks of the method described above may be executed. Alternatively, in other embodiments, the computing unit 801 may be configured to execute the method in other appropriate ways (such as, by means of hardware).

The functions described herein may be executed at least partially by one or more hardware logic components. For example, without not limitation, exemplary types of hardware logic components that may be used include: a field programmable gate array (FPGA), an application specific integrated circuit (ASIC), an application specific standard product (ASSP), a system on chip (SOC), a complex programmable logic device (CPLD) and the like. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

Program codes for implementing the method of the present disclosure may be written in any combination of one or more programming languages. These program codes may be provided to a processor or a controller of a general purpose computer, a special purpose computer or other programmable data processing device, such that the functions/operations specified in the flowcharts and/or the block diagrams are implemented when these program codes are executed by the processor or the controller. These program codes may execute entirely on a machine, partly on a machine, partially on the machine as a stand-alone software package and partially on a remote machine, or entirely on a remote machine or entirely on a server.

In the context of the present disclosure, the machine-readable medium may be a tangible medium that may contain or store a program to be used by or in connection with an instruction execution system, apparatus, or device. The machine-readable medium may be a machine-readable signal medium or a machine-readable storage medium. The machine-readable medium may include, but not limit to, an electronic, magnetic, optical, electromagnetic, infrared, or semiconductor system, apparatus, or device, or any suitable combination of the foregoing. More specific examples of the machine-readable storage medium may include electrical connections based on one or more wires, a portable computer disk, a hard disk, a RAM, a ROM, an erasable programmable read-only memory (EPROM or flash memory), an optical fiber, a portable compact disk read-only memory (CD-ROM), an optical storage, a magnetic storage device, or any suitable combination of the foregoing.

In order to provide interaction with a user, the systems and technologies described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a.computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (egg, a communication network). Examples of communication networks include: local region network (LAN), wide region network (WAN), and the Internet.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in the cloud computing service system to solve management difficulty and weak business scalability defects of traditional physical hosts and Virtual Private Server (VPS) services.

With the solutions of the disclosure, the user identifier in the request is determined in response to acquiring the request of displaying the workspace. The set of historical visual data associated with the user identifier is acquired. The set of historical visual data is displayed in the page of the workspace of the user corresponding to the user identifier. Therefore, the historical visual data may be displayed and viewed rapidly without reconstructing the model or reproducing the historical model, which greatly enhances training efficiency and saves time.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the principle of this application shall be included in the protection scope of this application.

An electronic device is intended to represent various types of digital computers, such as laptop computers, desktop computers, workstations, personal digital assistants, servers, blade servers, mainframe computers, and other suitable computers. An electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the disclosure described and/or required herein.

As shown in FIG. 8, a device 800 includes a computing unit 801, configured to execute various appropriate actions and processes according to a computer program stored in a read-only memory (ROM) 802 or loaded from a memory unit 808 to a random access memory (RAM) 803. In a RAM 803, various programs and data required for a device 800 may be stored. A computing unit 801, a ROM 802 and a ROM 803 may be connected with each other by a bus 804. An input/output (I/O) interface 805 is also connected to a bus 804.

A plurality of components in the device 800 are connected to an I/O interface 805, and includes: an input unit 806, for example, a keyboard, a mouse, etc.; an output unit 807, for example various types of displays, speakers; a memory unit 808, for example a magnetic disk, an optical disk; and a communication unit 809, for example, a network card, a modem, a wireless transceiver. A communication unit 809 allows a device 800 to exchange information/data through a computer network such as internet and/or various types of telecommunication networks and other devices.

A computing unit 801 may be various types of general and/or dedicated processing components with processing and computing ability. Some examples of a computing unit 801 include but not limited to a central processing unit (CPU), a graphics processing unit (GPU), various dedicated artificial intelligence (AI) computing chips, various computing units running a machine learning model algorithm, a digital signal processor (DSP), and any appropriate processor, controller, microcontroller, etc. The computing unit 801 executes various methods and processings as described above, for example, a method for processing visual data of a deep model. For example, in some embodiments, a method for processing visual data of a deep model may be further implemented as a computer software program, which is physically contained in a machine readable medium, such as a memory unit 808. In some embodiments, a part or all of the computer program may be loaded and/or installed on the device 800 through a ROM 802 and/or a communication unit 809. When the computer program is loaded on a RAM 803 and executed by a computing unit 801, one or more blocks in the method for processing visual data of a deep model as described above may be performed. Alternatively, in other embodiments, a computing unit 801 may be configured to execute a method for processing visual data of a deep model in other appropriate ways (for example, by virtue of a firmware).

Various implementation modes of systems and technologies described herein may be implemented in a digital electronic circuit system, an integrated circuit system, a field programmable gate array(FPGA), a dedicated application specific integrated circuit (ASIC), a system on a chip (SoC), a load programmable logic device (CPLD), a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

A computer code configured to execute a method in the disclosure may be written with one or any combination of multiple programming languages. These programming languages may be provided to a processor or a controller of a general purpose computer, a dedicated computer, or other apparatuses for programmable data processing so that the function/operation specified in the flowchart and/or block diagram may be performed when the program code is executed by the processor or controller. A computer code may be executed completely or partly on the machine, executed partly on the machine as an independent software package and executed partly or completely on the remote machine or server.

In the context of the disclosure, a machine-readable medium may be a tangible medium that may contain or store a program intended for use in or in conjunction with an instruction execution system, apparatus, or device. A machine-readable medium may be a machine readable signal medium or a machine readable storage medium. A machine readable storage medium may include but not limited to an electronic, magnetic, optical, electromagnetic, infrared, or semiconductor system, apparatus or device, or any appropriate combination thereof. A more specific example of a machine readable storage medium includes an electronic connector with one or more cables, a portable computer disk, a hardware, a random access memory (RAM), a read-only memory (ROM), an erasable programmable read-only memory (an EPROM or a flash memory),an optical fiber device, and a portable optical disk read-only memory(CDROM), an optical storage device, a magnetic storage device, or any appropriate combination of the above.

In order to provide interaction with the user, the systems and technologies described here may be implemented on a computer, and the computer has: a display apparatus for displaying information to the user (for example, a CRT (cathode ray tube) or a LCD (liquid crystal display) monitor); and a keyboard and a pointing apparatus (for example, a mouse or a trackball) through which the user may provide input to the computer. Other types of apparatuses may further be configured to provide interaction with the user; for example, the feedback provided to the user may be any form of sensory feedback (for example, visual feedback, auditory feedback, or tactile feedback); and input from the user may be received in any form (including an acoustic input, a voice input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation mode of the system and technology described herein), or a computing system including any combination of such back-end components, middleware components or front-end components. The system components may be connected to each other through any form or medium of digital data communication (for example, a communication network). Examples of communication networks include: a local area network (LAN), a wide area network (WAN), an internet and a blockchain network.

The computer system may include a client and a server. The client and server are generally far away from each other and generally interact with each other through a communication network. The relation between the client and the server is generated by computer programs that run on the corresponding computer and have a client-server relationship with each other. A server may be a cloud server, also known as a cloud computing server or a cloud host, is a host product in a cloud computing service system, to solve the shortcomings of large management difficulty and weak business expansibility existed in the traditional physical host and Virtual Private Server (VPS) service. A server further may be a server with a distributed system, or a server in combination with a blockchain.

According to the technical scheme of the disclosure, in response to acquiring a workspace display request, a user identifier in the display request is determined, and a set of historical visual data associated with the user identifier is acquired, and the set of historical visual data in a page of the workspace of a user corresponding to the user identifier is displayed. Thus, rapid display and view of the historical visual data may be achieved without necessarily reconstructing a model or reproducing a historical model, which greatly enhances training efficiency and saves time.

It should be understood that, various forms of procedures shown above may be configured to reorder, add or delete blocks. For example, blocks described in the disclosure may be executed in parallel, sequentially, or in a different order, as long as the desired result of the technical solution disclosed in the disclosure may be achieved, which will not be limited herein.

The above specific implementations do not constitute a limitation on the protection scope of the disclosure. Those skilled in the art should understand that various modifications, combinations, sub-combinations and substitutions may be made according to design requirements and other factors. Any modification, equivalent replacement, improvement, etc., made within the principle of embodiments of the disclosure shall be included within the protection scope of embodiments of the disclosure.

## Claims

1. A method for processing visual data of a deep model, comprising:
determining (101; 201) a user identifier in a request of displaying a workspace in response to acquiring the request;
acquiring (102; 202) a set of historical visual data associated with the user identifier; and
displaying (103; 203) the set of historical visual data in a page of a workspace of a user corresponding to the user identifier.

2. The method of claim 1, wherein, the set of historical visual data comprises a plurality of pieces of historical visual data and a time point of generating each of the plurality of pieces of historical visual data, displaying (103; 203) the set of historical visual data in the page of the workspace of the user corresponding to the user identifier, comprises:
displaying the plurality of pieces of historical visual data one by one in the page of the workspace of the user based on the time point of generating each of the plurality of pieces of historical visual data.

3. The method of claim 1, wherein, the set of historical visual data comprises a plurality of pieces of historical visual data and a project name of each of the plurality of pieces of historical visual data, displaying (103; 203) the set of historical visual data in the page of the workspace of the user corresponding to the user identifier, comprises:
displaying the plurality of pieces of historical visual data one by one in the page of the workspace of the user based on the project name of each of the plurality of pieces of historical visual data.

4. The method of any one of claims 1 to 3, further comprising:
enlarging and displaying (204) any visual data in a preview layer in response to an acquired selection operation on the any visual data, wherein the preview layer is located on an upper layer of a layer of the page of the workspace.

5. The method of any one of claims 1 to 4, wherein, the set of historical visual data comprises a storage address associated with each of a plurality of pieces of historical visual data, and the method further comprises:
copying (205) a storage address associated with any visual data in response to an acquired click operation of a sharing control associated with the any visual data.

6. The method of any one of claims 1 to 5, wherein, the set of historical visual data comprises a storage address associated with each of a plurality of pieces of historical visual data, and the method further comprises:
displaying (206) a deleting confirmation message by a pop-up window in response to an acquired click operation of a deleting control associated with the any visual data; and
processing (207) the any visual data based on a processing manner corresponding to any control in response to an acquired click operation of the any control of the pop-up window.

7. The method of any one of claims 1 to 6, wherein, the page of the workspace comprises a search input box, and the method further comprises:
determining (208) a current search title in the search input box in response to an acquired search request;
querying (209) the set of historical visual data based on the search title to acquire target historical visual data; and
displaying (210) the target historical visual data.

8. The method of any one of claims 1 to 7, further comprising:
displaying (304) a visual data adding interface in response that a database associated with the user identifier does not comprise the historical visual data; and
adding (305) visual data into the database associated with the user identifier in response to a visual data adding request acquired in the data adding interface.

9. The method of claim 8, further comprising:
verifying visual data to be added;
displaying a name of the visual data to be added in the data adding interface in response that the visual data to be added passes the verifying; and
displaying a data abnormality reason in the data adding interface in response that the visual data to be added does not pass the verifying.

10. The method of any one of claims 1 to 9, further comprising:
determining (301) that the request of displaying the workspace is acquired in response to acquiring a click operation on a control of the workspace; or,
determining (301) that the request of displaying the workspace is acquired in response to acquiring a command line instruction configured to open the workspace.

11. The method of claim 10, further comprising:
displaying (303) a login interface of a visual application of a deep model in response that the user corresponding to the user identifier does not log in the visual application of the deep model.

12. An apparatus for processing visual data of a deep model, comprising:
a first determining module (610), configured to determine a user identifier in a request of displaying a workspace in response to acquiring the request;
an acquiring module (620), configured to acquire a set of historical visual data associated with the user identifier; and
a displaying module (630), configured to display the set of historical visual data in a page of a workspace of a user corresponding to the user identifier.

13. An electronic device, comprising:
at least one processor; and
a memory communicatively coupled to the at least one processor; wherein,
the memory is configured to store instructions executable by the at least one processor, and when the instructions are executed by the at least one processor, the at least one processor is cause to perform the method according to any one of claims 1 to 11.

14. A non-transitory computer-readable storage medium storing computer instructions, wherein the computer instructions are configured to cause a computer to execute the method according to any one of claims 1 to 11.

15. A computer program product comprising a computer program, wherein the computer program is configured to execute the method according to any one of claims 1 to 11 when executed by a processor.
